(19) **Europäisches Patentamt / European Patent Office / Office européen des brevets**

(11) **EP 2 398 269 B1**

(12) **EUROPEAN PATENT SPECIFICATION**

(45) Date of publication and mention
of the grant of the patent:
**29.05.2019 Bulletin 2019/22**

(21) Application number: **10740892.4**

(22) Date of filing: **08.01.2010**

(51) Int Cl.:
*H04B 17/336* (2015.01)          *H04W 74/08* (2009.01)
*H04W 24/08* (2009.01)          *H04B 17/373* (2015.01)

(86) International application number:
**PCT/CN2010/070080**

(87) International publication number:
**WO 2010/091603 (19.08.2010 Gazette 2010/33)**

(54) **SIGNAL TO INTERFERENCE PLUS NOISE RATIO (SINR) ESTIMATION METHOD AND DEVICE**

VERFAHREN UND VORRICHTUNG ZUR MESSUNG EINES SIGNAL/INTERFERENZ- BZW. SIGNAL/GERÄUSCH-VERHÄLTNISSES (SINR)

PROCÉDÉ ET DISPOSITIF D'ESTIMATION DE RAPPORT SIGNAL SUR INTERFÉRENCE PLUS BRUIT (SINR)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.02.2009 CN 200910077474**

(43) Date of publication of application:
**21.12.2011 Bulletin 2011/51**

(73) Proprietor: **ZTE Corporation**
**Shenzhen, Guangdong 518057 (CN)**

(72) Inventors:
• **ZHANG, Qinghong**
**Shenzhen**
**Guangdong 518057 (CN)**
• **LI, Yan**
**Shenzhen**
**Guangdong 518057 (CN)**
• **LIU, Wenhao**
**Shenzhen**
**Guangdong 518057 (CN)**

(74) Representative: **Savi, Massimiliano et al**
**NOTARBARTOLO & GERVASI S.p.A.**
**Corso di Porta Vittoria 9**
**20122 Milano (IT)**

(56) References cited:
EP-A1- 1 821 445          EP-A1- 1 981 199
CN-A- 101 232 432          CN-A- 101 237 659
US-A1- 2006 104 382          US-A1- 2008 139 237

• SAMSUNG: "Link Adaptation Using DM RS for UL VoIP Transmissions", 3GPP DRAFT; R1-074070 VOIP DM RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20071002, 2 October 2007 (2007-10-02), XP050107608, [retrieved on 2007-10-02]
• TEXAS INSTRUMENTS: "Further Analysis on Uplink SU-MIMO for E-UTRA", 3GPP DRAFT; R1-090588 TI UL MIMO SIMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318477, [retrieved on 2009-02-03]
• 'ISWCS '08. IEEE nternational Symposium on Wireless Communication Systems. 2008. Pages 103- 107, 21-24 October 2008', October 2008 deel KAWAMURA, TERUO ET AL.: 'Experiments on IP and Physical Layer Packet Throughput Performance in Evolved UTRA Uplink Using SC-FDMA Radio Access.', pages 103 - 107, XP031380308
• 'Technical Specification Group adio Access Network; Evolved Universal Terrestrial Radio Access (E-UTRA); Physical Channels and Modulation (Release 8)' 3GPP TS 36.211 V8.5.0, 3RD GENERATION PARTNERSHIP PROJECT December 2008, XP007912814

**Description**

**TECHNICAL FIELD**

The present invention relates to the technique of estimating a Signal to Interference plus Noise Ratio (SINR), and in particular, to a method and device for estimating an SINR.

**BACKGROUND**

During the Long Term Evolution (LTE) system uplink scheduling and power control, via a Reference Signal (RS) sent by a User Equipment (UE), an eNodeB estimates the SINR in the designated frequency domain position in the uplink physical channel of the UE at the current Transmission Time Interval (TTI). The designated frequency domain position in the uplink physical channel of the UE at the current TTI is the channel resource to be estimated that is allocated to the UE. The RS includes 2 types of signals: Sounding Reference Signal (SRS) and Demodulation Reference Signal (DMRS). The method for estimating the SINR of the channel resource of the UE to be estimated includes: the eNodeB pre-determines that the SINR of the channel resource to be estimated is estimated by using the SRS, measures the SINR of the last SRS sent by the UE and measures the SINR of the last DMRS sent by the UE, and takes the measured SINR of the SRS as the SINR estimate of the channel resource to be estimated; or the eNodeB pre-determines that the SINR of the channel resource to be estimated is estimated by using the DMRS, measures the SINR of the last SRS sent by the UE and measures the SINR of the last DMRS sent by the UE, and takes the measured SINR of the DMRS as the SINR estimate of the channel resource to be estimated.

The SRS or DMRS sent by the UE are distributed randomly relative to the channel resource of the UE to be estimated, that is, the relative position of the channel resource occupied by the SRS or DMRS sent by the UE and the channel resource of the UE to be estimated is not fixed. As a result, with the above method for obtaining the SINR by only using the SRS or DMRS, the accuracy of the SINR estimates for different channel resources to be estimated is not stable, with part of SINR estimates being of high accuracy and part of SINR estimate being of low accuracy, that is, the accuracy of the SINR estimate of the channel resource to be estimated cannot be guaranteed.

SAMSUNG: "link adaptation using DMRS for UL VoIP transmissions" discusses a manner for link adaptation.

EP 1 981 199 discusses a radio communication system, radio communication device, and channel correlation matrix decision method.

US 2006/104382 discusses a method and apparatus for transmitting/receiving signals in multiple input multiple output wireless communication system employing beam forming scheme.

3GPP TSG RAN WG1 #56, Athens, Greece, 9-13 February, 2009 discusses uplink SU-MIMO for E-UTRA.

EP 1 821 445 discusses a method to improve the channel estimate in broadband simo/mimo cellular radio networks during abrupt interference variations.

**SUMMARY**

In view of the above problem, the present invention aims to provide a method and device for estimating an SINR, to guarantee the accuracy of the SINR estimate of the channel resource to be estimated.

To realize the above objective, the technical solutions of the present invention are as follows.

In one aspect of the present invention, a method for estimating an SINR is provided, which comprises:

measuring an SINR of a last SRS sent by a UE and measuring an SINR of a last DMRS sent by the UE;
determining channel correlation between channel resource occupied by the last SRS sent by the UE and channel resource to be estimated, and determining channel correlation between channel resource occupied by the last DMRS sent by the UE and channel resource to be estimated; and
determining an SINR estimate of the channel resource to be estimated according to the measured SINRs and strength of the two determined channel correlations.

Further, the step of determining the SINR estimate of the channel resource to be estimated according to the measured SINRs and strength of the two determined channel correlations may comprise:
comparing the channel correlation between the channel resource occupied by the last SRS sent by the UE and the channel resource to be estimated with the channel correlation between the channel resource occupied by the last DMRS sent by the UE and the channel resource to be estimated; if the channel correlation between the channel resource occupied by the last SRS sent by the UE and the channel resource to be estimated is stronger, taking the measured SINR of the SRS as the SINR estimate of the channel resource to be estimated; otherwise, taking the measured SINR of the DMRS as the SINR estimate of the channel resource to be estimated; otherwise, taking the measured SINR of the DMRS as the SINR estimate of the channel resource to be estimated.

Further, the step of determining the SINR estimate of the channel resource to be estimated according to the measured SINRs and strength of the two determined channel correlations may comprise:

summing up the two determined channel correlations; taking the ratio of the channel correlation, between the channel resource occupied by the SRS and the channel resource to be estimated, to the sum of two channel correlations as SINR weight of the SRS, and taking the ratio of the channel correlation, between the channel resource occupied by the DMRS and the channel resource to be estimated, to the sum of two channel correlations as SINR weight of the DMRS; calculating the product of the SINR weight of the SRS and the SINR of the SRS, and calculating the product of the SINR weight of the DMRS and the SINR of the DMRS; and summing up the two products, to obtain the SINR estimate of the channel resource to be estimated.

Further, the channel correlation between the channel resource occupied by the last SRS sent by the UE and the channel resource to be estimated may be calculated as:

$$R\_SRS = \frac{1}{\sqrt{(\alpha \times T\_SRS)^2 + (\beta \times F\_SRS)^2}}$$

wherein R_SRS is the channel correlation between the channel resource occupied by the last SRS sent by the UE and the channel resource to be estimated, $\alpha$ is time offset sensitivity of a wireless channel, $\beta$ is frequency offset sensitivity of a wireless channel, $T\_SRS$ is time offset of the channel resource occupied by the last SRS sent by the UE relative to the channel resource to be estimated, $F\_SRS$ is frequency offset of the channel resource occupied by the last SRS sent by the UE relative to the channel resource to be estimated.

Further, the channel correlation between the channel resource occupied by the last DMRS sent by the UE and the channel resource to be estimated may be calculated as:

$$R\_DMRS = \frac{1}{\sqrt{(\alpha \times T\_DMRS)^2 + (\beta \times F\_DMRS)^2}}.$$

Wherein R_DMRS is the channel correlation between the channel resource occupied by the last DMRS sent by the UE and the channel resource to be estimated, $\alpha$ is time offset sensitivity of a wireless channel, $\beta$ is frequency offset sensitivity of a wireless channel, $T\_DMRS$ is time offset of the channel resource occupied by the last DMRS sent by the UE relative to the channel resource to be estimated, $F\_DMRS$ is frequency offset of the channel resource occupied by the last DMRS sent by the UE relative to the channel resource to be estimated.

Further, the method may further comprise:

pre-calculating and storing a time offset sensitivity and a frequency offset sensitivity of a wireless channel; calculating the time offset sensitivity and the frequency offset sensitivity of the wireless channel respectively every pre-set measurement period; and replacing the stored time offset sensitivity with the calculated time offset sensitivity, and replacing the stored frequency offset sensitivity with the calculated frequency offset sensitivity.

Further, the step of calculating the time offset sensitivity of the wireless channel may comprise: requesting the UE to transmit identical pilot sequences sequentially at a same frequency domain position; and calculating correlation of the pilot sequences received, and taking the correlation as the time offset sensitivity;

the step of calculating the frequency offset sensitivity may comprise: requesting the UE to transmit identical pilot sequences simultaneously at two frequency domain resources; and calculating the correlation of the pilot sequences received, and taking the correlation as the frequency offset sensitivity.

In another aspect of the present invention, a device for estimating an SINR is provided, which comprises:

a measuring module being arranged to measure an SINR of a last SRS sent by a UE, and measure an SINR of a last DMRS sent by the UE;

a calculating module being arranged to determine channel correlation between channel resource occupied by the last SRS sent by the UE and channel resource to be estimated and determine channel correlation between channel resource occupied by the last DMRS sent by the UE and channel resource to be estimated;

an estimation module being arranged to determine an SINR estimate of the channel resource to be estimated according to the measured SINRs and strength of the two determined channel correlations.

Further, the estimation module may comprise:

a comparing module being arranged to compare the channel correlation between the channel resource occupied by the last SRS sent by the UE and the channel resource to be estimated with the channel correlation between the channel resource occupied by the last DMRS sent by the UE and the channel resource to be estimated, and send result of comparing to a determining module;

the determining module being arranged to take the SINR with stronger channel correlation selected from the SINRs of the SRS and DMRS as the SINR estimate of the channel resource to be estimated according to the result of comparing.

Further, the estimation module may comprise:

a first calculating module being arranged to calculate the sum of the two determined channel correlations; take the ratio of the channel correlation, between the channel resource occupied by the SRS and the channel resource to be estimated, to the sum of two channel correlations as SINR weight of the SRS, and take the ratio of the channel correlation, between the channel resource occupied by the DMRS and the channel resource to be estimated, to the sum of two channel correlations as SINR weight of the DMRS;
a second calculating module being arranged to calculate product of the SINR weight of the SRS and the SINR of the SRS, and calculate product of the SINR weight of the DMRS and the SINR of the DMRS, and sum up the two products to obtain the SINR estimate of the channel resource to be estimated.

With the method and device for estimating an SINR provided by the present invention, by comparing the channel correlations, the measured SINR which is more approximate to the true value of the SINR of the channel resource to be estimated is determined, then the determined SINR is taken as the SINR estimate of the channel resource to be estimated; or, by determining the weight of the measured SINR according to the determined channel correlations, the SINR estimate of the channel resource to be estimated is made to be more approximate to the true value of the SINR of the channel resource to be estimated, thus the accuracy of the SINR estimate of the channel resource to be estimated is guaranteed.

## BRIEF DESCRIPTION OF THE DRAWINGS

Fig. 1 shows an implementation flow chart of a method for estimating an SINR according to the present invention;
Fig. 2 shows a structure schematic diagram of a device for estimating an SINR according to the first embodiment of the present invention;
Fig. 3 shows a structure schematic diagram of a device for estimating an SINR according to the second embodiment of the present invention.

## DETAILED DESCRIPTION

The principle of the present invention is as follows: a relative position of the channel resource occupied by the SRS or the DMRS sent by the UE and the channel resource of the UE to be estimated is not fixed, and the relative position affects the channel correlation between the channel resource occupied by the SRS or DMRS and the channel resource to be estimated, thus the strength of the channel correlation between the channel resource occupied by the SRS or the DMRS and the channel resource to be estimated is also not fixed. The stronger the channel correlation between the channel resource occupied by the SRS or DMRS and the channel resource to be estimated is, the more approximate the SINR of the SRS or DMRS is to the true value of the SINR of the channel resource to be estimated. In other words, the accuracy of the SINR estimate of the channel resource to be estimated can be improved by determining the channel correlations, and taking the SINR with stronger channel correlation selected from the SINRs of the SRS and DMRS as the SINR estimate of the channel resource to be estimated, or making the SINR of the SRS or DMRS with stronger channel correlation make up a larger proportion in the SINR estimates of the channel resource to be estimated.
The basic idea of the present invention is that: respectively determining the channel correlation between the channel resource occupied by the last SRS sent by the UE and the channel resource to be estimated and the channel correlation between the channel resource occupied by the last DMRS sent by the UE and the channel resource to be estimated; determining the SINR in the measured SINRs of the SRS and DMRS which is more approximate to the true value of the SINR of the channel resource to be estimated by comparing the strength of channel correlations; then taking the determined SINR measured which is more approximate to the true value of the SINR of the channel resource to be estimated as the SINR estimate of the channel resource to be estimated; or making the SINR in the measured SINRs which is more approximate to the true value of the SINR of channel resource to be estimated make up a larger proportion in the SINR estimates of channel resource to be estimated by determining the weights of the measured SINRs of the SRS and DMRS according to the determined channel correlations, thereby making the SINR estimate of the channel resource to be estimated more approximate to the true value of the SINR of the channel resource to be estimated, thus guaranteeing the accuracy of the SINR estimate of the channel resource to be estimated.

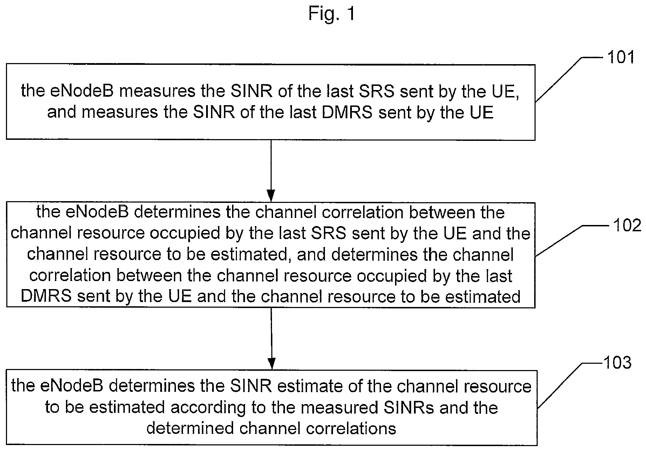

As shown in Fig. 1, an implementation flow of the method for estimating the SINR according to the present invention comprises the following steps.

Step 101: The eNodeB measures the SINR of the last SRS sent by the UE, and measures the SINR of the last DMRS sent by the UE; wherein the UE is the one to which the channel resource to be estimated belongs, that is, the channel resource to be estimated is the resource allocated to the UE by the eNodeB.

Step 102: The eNodeB determines the channel correlation between the channel resource occupied by the last SRS sent by the UE and the channel resource to be estimated and determines the channel correlation between the channel resource occupied by the last DMRS sent by the UE and the channel resource to be estimated.

Specifically, the following formula is used to determine the channel correlation between the channel resource occupied by the last SRS sent by the UE and the channel resource to be estimated.

$$R\_SRS = \frac{1}{\sqrt{(\alpha \times T\_SRS)^2 + (\beta \times F\_SRS)^2}}$$

Wherein R_SRS is channel correlation between the channel resource occupied by the last SRS sent by the UE and the channel resource to be estimated, $\alpha$ is time offset sensitivity of a wireless channel (characterizing of the changing rate of an SINR and can be indicated by the changes of an SINR per unit time), $\beta$ is frequency offset sensitivity of a wireless channel (characterizing changes of an SINR with carrier frequency and can be indicated by the changes of an SINR per unit bandwidth), $T\_SRS$ is time offset of the channel resource occupied by the last SRS sent by the UE relative to the channel resource to be estimated, $F\_SRS$ is frequency offset of the channel resource occupied by the last SRS sent by the UE relative to the channel resource to be estimated.

The following formula is used to determine the channel correlation between the channel resource occupied by the last DMRS sent by the UE and the channel resource to be estimated.

$$R\_DMRS = \frac{1}{\sqrt{(\alpha \times T\_DMRS)^2 + (\beta \times F\_DMRS)^2}}$$

Wherein R_DMRS is channel correlation between the channel resource occupied by the last DMRS sent by the UE and the channel resource to be estimated, $\alpha$ is time offset sensitivity of a wireless channel, $\beta$ is frequency offset sensitivity of a wireless channel, $T\_DMRS$ is time offset of the channel resource occupied by the last DMRS sent by the UE relative to the channel resource to be estimated, $F\_DMRS$ is frequency offset of the channel resource occupied by the last DMRS sent by the UE relative to the channel resource to be estimated.

Here, the time offset sensitivity and the frequency offset sensitivity of the wireless channel have been pre-stored in the eNodeB, and the eNodeB updates the stored time offset sensitivity and frequency offset sensitivity every pre-set measurement period, which specifically comprises:
pre-calculating and storing the time offset sensitivity and the frequency offset sensitivity of the wireless channel; calculating the time offset sensitivity and the frequency offset sensitivity of the wireless channel respectively every pre-set measurement period, replacing the stored time offset sensitivity with the calculated time offset sensitivity, and replacing the stored frequency offset sensitivity with the calculated frequency offset sensitivity. The wireless channel represents the overall time-frequency domain resources in the LTE system, the measurement period should neither be less than the coherence time of the wireless channel, nor too long, for there is so little changes in the wireless channel within the coherence time that the time offset sensitivity and frequency offset sensitivity of the wireless channel can be considered to be constant within the coherence time, and there is no need to update the stored time offset sensitivity and frequency offset sensitivity within the coherence time, however, if the stored time offset sensitivity and frequency offset sensitivity are not updated for a long time, time selective fading and frequency selective fading of the wireless channel will cause a big difference between the stored time offset sensitivity and frequency offset sensitivity and the current real time offset sensitivity and frequency offset sensitivity of the wireless channel, thereby influencing the accuracy in calculating the correlations.

The step of calculating the time offset sensitivity of the wireless channel comprises:
requesting the UE to transmit identical pilot sequences sequentially at the same frequency domain position; and calculating the correlation of the received pilot sequences, and taking the correlation as the time offset sensitivity. Wherein, the interval time of transmitting the identical pilot sequences sequentially may be the coherence time of the wireless channel, and the pilot sequence is a vector, therefore, a method for calculating the vector correlation can be applied for calculating the correlation of the received pilot sequences;

The step of calculating the frequency offset sensitivity of the wireless channel comprises:

requesting the UE to transmit identical pilot sequences simultaneously at two frequency domain resources; and calculating the correlation of the pilot sequences, and taking the correlation as the frequency offset sensitivity. Wherein, the frequency interval between the two frequency domain resources may be the coherence bandwidth of the wireless channel.

Step 103: The eNodeB determines the SINR estimate of the channel resource to be estimated according to the measured SINR and the determined channel correlation.

The step of determining the SINR estimate of the channel resource to be estimated comprises:

comparing the channel correlation between the channel resource occupied by the last SRS sent by the UE and the channel resource to be estimated and the channel correlation between the channel resource occupied by the last DMRS sent by the UE and the channel resource to be estimated; if the channel correlation between the channel resource occupied by the last SRS sent by the UE and the channel resource to be estimated is stronger, taking the measured SINR of the SRS as the SINR estimate of the channel resource to be estimated; otherwise, taking the measured SINR of the DMRS as the SINR estimate of the channel resource to be estimated; or

summing up the two determined channel correlations; taking the ratio of the channel correlation, between the channel resource occupied by the SRS and the channel resource to be estimated, to the sum of two channel correlations as the SINR weight of the SRS, and taking the ratio of the channel correlation, between the channel resource occupied by the DMRS and the channel resource to be estimated, to the sum of two channel correlations as the SINR weight of the DMRS; calculating the product of the SINR weight of the SRS and the SINR of the SRS, and calculating the product of the SINR weight of the DMRS and the SINR of the DMRS; summing up the two products, to obtain the SINR estimate of the channel resource to be estimated. Here, the SINR estimate of the channel resource to be estimated can be represented as follows:

$$\text{SINR\_EST} = R\_SRS\_N \times SINR\_SRS + R\_DMRS\_N \times SINR\_DMRS$$

wherein SINR_EST is the SINR estimate of the channel resource to be estimated, $R\_SRS\_N$ is SINR weight of the SRS, $SINR\_SRS$ is the SINR of the SRS, $R\_DMRS\_N$ is SINR weight of the DMRS, $SINR\_DMRS$ is the SINR of the DMRS.

In this step, by comparing the channel correlation between the channel resource occupied by the last SRS sent by the UE and the channel resource to be estimated with the channel correlation between the channel resource occupied by the last DMRS sent by the UE and the channel resource to be estimated, the SINR in the measured SINRs of the SRS and DMRS which is more approximate to the true value of the SINR of the channel resource to be estimated is determined, then the measured SINR which is more approximate to the true value of the SINR of the channel resource to be estimated is taken as the SINR estimate of the channel resource to be estimated; or by determining the SINR weights of the SRS and DMRS according to the determined channel correlations, the measured SINR which is more approximate to the true value of the SINR of the channel resource to be estimated is made to make up a larger proportion in the SINR estimates of channel resource to be estimated, and the SINR estimate of the channel resource to be estimated is further made to be more approximate to the true value of the SINR of the channel resource to be estimated, thus guaranteeing the accuracy of the SINR estimate of the channel resource to be estimated.

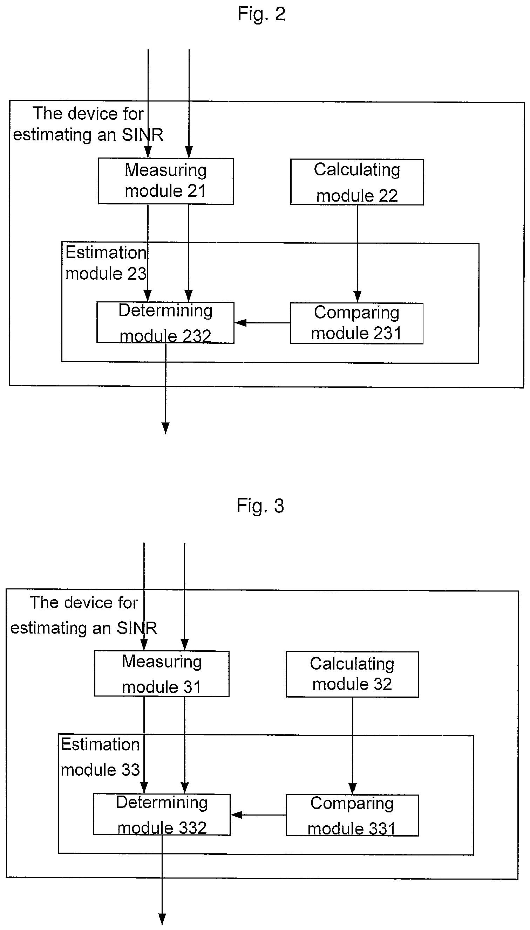

As shown in Fig. 2, which illustrates the structure of a device for estimating an SINR according to the first embodiment of the present invention, the device comprises:

a measuring module 21 arranged to measure the SINR of the last SRS sent by the UE, and measuring the SINR of the last DMRS sent by the UE;
a calculating module 22 arranged to determine the channel correlation between the channel resource occupied by the last SRS sent by the UE and the channel resource to be estimated and determining the channel correlation between the channel resource occupied by the last DMRS sent by the UE and the channel resource to be estimated;
an estimation module 23 arranged to determine the SINR estimate of the channel resource to be estimated according to the measured SINRs and the determined channel correlations.

Further, the estimation module 23 comprises a comparing module 231 and a determining module 232.

The comparing module 231 is arranged to compare the channel correlation between the channel resource occupied by the last SRS sent by the UE and the channel resource to be estimated with the channel correlation between the channel resource occupied by the last DMRS sent by the UE and the channel resource to be estimated, and sending result of comparing to the determining module.

The determining module 232 is arranged to take the SINR with stronger channel correlation selected from the measured SINRs of the SRS and DMRS as the SINR estimate of the channel resource to be estimated according to the result of comparing.

As shown in Fig. 3, which illustrates the structure of a device for estimating an SINR according to the second embodiment of the present invention, the device comprises:

a measuring module 31 arranged to measure the SINR of the last SRS sent by the UE, and measuring the SINR of the last DMRS sent by the UE;

a calculating module 32 arranged to determine the channel correlation between the channel resource occupied by the last SRS sent by the UE and the channel resource to be estimated and determining the channel correlation between the channel resource occupied by the last DMRS sent by the UE and the channel resource to be estimated;

an estimation module 33 arranged to determine the SINR estimate of the channel resource to be estimated according to the measured SINRs and the determined channel correlations.

Further, the estimation module 33 comprises a first calculating module 331 and a second calculating module 332.

The first calculating module 331 is arranged to calculate the sum of the two determined channel correlations; take the ratio of the channel correlation, between the channel resource occupied by the SRS and the channel resource to be estimated, to the sum of two channel correlations as the SINR weight of the SRS, and taking the ratio of the channel correlation, between the channel resource occupied by the DMRS and the channel resource to be estimated, to the sum of two channel correlations as the SINR weight of the DMRS.

The second calculating module 332 is arranged to calculate the product of the SINR weight of the SRS and the SINR of the SRS, calculating the product of the SINR weight of the DMRS and the SINR of the DMRS, and summing up the two calculated products, to obtain the SINR estimate of the channel resource to be estimated.

The above are only preferred embodiments of the present invention and not used for limiting the protection scope of the present invention.

**Claims**

1.  A method for estimating an SINR, the method comprising:

    measuring (101) an SINR of a last SRS sent by a UE, and measuring an SINR of a last DMRS sent by the UE;
    determining (102) channel correlation between channel resource occupied by the last SRS sent by the UE and channel resource to be estimated, and determining channel correlation between channel resource occupied by the last DMRS sent by the UE and channel resource to be estimated; and
    determining (103) an SINR estimate of the channel resource to be estimated according to the measured SINRs and strength of the two determined channel correlations.

2.  The method according to claim 1, wherein the step of determining the SINR estimate of the channel resource to be estimated according to the measured SINRs and strength of the two determined channel correlations comprises: comparing the channel correlation between the channel resource occupied by the last SRS sent by the UE and the channel resource to be estimated with the channel correlation between the channel resource occupied by the last DMRS sent by the UE and the channel resource to be estimated; if the channel correlation between the channel resource occupied by the last SRS sent by the UE and the channel resource to be estimated is stronger, taking the measured SINR of the SRS as the SINR estimate of the channel resource to be estimated; otherwise, taking the measured SINR of the DMRS as the SINR estimate of the channel resource to be estimated.

3.  The method according to claim 1, wherein the step of determining the SINR estimate of the channel resource to be estimated according to the measured SINRs and strength of the two determined channel correlations comprises: summing up the two determined channel correlations; taking the ratio of the channel correlation, between the channel resource occupied by the SRS and the channel resource to be estimated, to the sum of two channel correlations as SINR weight of the SRS, and taking the ratio of the channel correlation, between the channel resource occupied by the DMRS and the channel resource to be estimated, to the sum of two channel correlations as SINR weight of the DMRS; calculating the product of the SINR weight of the SRS and the SINR of the SRS, and calculating the product of the SINR weight of the DMRS and the SINR of the DMRS; and summing up the two products, to obtain the SINR estimate of the channel resource to be estimated.

4. The method according to claim 1, wherein the channel correlation between the channel resource occupied by the last SRS sent by the UE and the channel resource to be estimated is calculated as:

$$R\_SRS = \frac{1}{\sqrt{(\alpha \times T\_SRS)^2 + (\beta \times F\_SRS)^2}}$$

wherein R_SRS is a channel correlation between the channel resource occupied by the last SRS sent by the UE and the channel resource to be estimated, $\alpha$ is a time offset sensitivity of a wireless channel, $\beta$ is a frequency offset sensitivity of a wireless channel, $T\_SRS$ is a time offset of the channel resource occupied by the last SRS sent by the UE relative to the channel resource to be estimated, $F\_SRS$ is a frequency offset of the channel resource occupied by the last SRS sent by the UE relative to the channel resource to be estimated.

5. The method according to claim 1, wherein the channel correlation between the channel resource occupied by the last DMRS sent by the UE and the channel resource to be estimated is calculated as:

$$R\_DMRS = \frac{1}{\sqrt{(\alpha \times T\_DMRS)^2 + (\beta \times F\_DMRS)^2}}$$

wherein R_DMRS is a channel correlation between the channel resource occupied by the last DMRS sent by the UE and the channel resource to be estimated, $\alpha$ is a time offset sensitivity of a wireless channel, $\beta$ is a frequency offset sensitivity of a wireless channel, $T\_DMRS$ is a time offset of the channel resource occupied by the last DMRS sent by the UE relative to the channel resource to be estimated, $F\_DMRS$ is a frequency offset of the channel resource occupied by the last DMRS sent by the UE relative to the channel resource to be estimated.

6. The method according to claim 4 or 5, further comprising:
pre-calculating and storing a time offset sensitivity and a frequency offset sensitivity of a wireless channel; calculating the time offset sensitivity and the frequency offset sensitivity of the wireless channel respectively every set measurement period; and replacing the stored time offset sensitivity with the calculated time offset sensitivity, and replacing the stored frequency offset sensitivity with the calculated frequency offset sensitivity.

7. The method according to claim 6, wherein
the step of calculating the time offset sensitivity of the wireless channel comprises:

requesting the UE to transmit identical pilot sequences sequentially at a same frequency domain position; and calculating correlation of the pilot sequences received, and taking the correlation as the time offset sensitivity; the step of calculating the frequency offset sensitivity comprises: requesting the UE to transmit identical pilot sequences simultaneously at two frequency domain resources; and calculating the correlation of the pilot sequences received, and taking the correlation as the frequency offset sensitivity.

8. A device for estimating an SINR, the device comprising:

a measuring module being arranged to measure (101) an SINR of a last SRS sent by a UE, and measure an SINR of a last DMRS sent by the UE;
a calculating module being arranged to determine (102) channel correlation between channel resource occupied by the last SRS sent by the UE and channel resource to be estimated, and determine channel correlation between channel resource occupied by the last DMRS sent by the UE and channel resource to be estimated; and
an estimation module being arranged to determine (103) an SINR estimate of the channel resource to be estimated according to the measured SINRs and strength of the two determined channel correlations.

9. The device according to claim 8, wherein the estimation module comprises:

a comparing module being arranged to compare the channel correlation between the channel resource occupied by the last SRS sent by the UE and the channel resource to be estimated with the channel correlation between the channel resource occupied by the last DMRS sent by the UE and the channel resource to be estimated, and send result of comparing to a determining module; and

the determining module being arranged to take the SINR with stronger channel correlation selected from the SINRs of the SRS and DMRS as the SINR estimate of the channel resource to be estimated according to the result of comparing.

10. The device according to claim 8 or 9, wherein the estimation module comprises:

a first calculating module being arranged to calculate the sum of the two determined channel correlations; take the ratio of the channel correlation, between the channel resource occupied by the SRS and the channel resource to be estimated, to the sum of two channel correlations as SINR weight of the SRS; and take the ratio of the channel correlation, between the channel resource occupied by the DMRS and the channel resource to be estimated, to the sum of two channel correlations as SINR weight of the DMRS; and

a second calculating module being arranged to calculate a product of the SINR weight of the SRS and the SINR of the SRS, calculate a product of the SINR weight of the DMRS and the SINR of the DMRS, and sum up the two products, to obtain the SINR estimate of the channel resource to be estimated.

**Patentansprüche**

1. Verfahren zur Schätzung eines SINR, wobei das Verfahren folgende Schritte umfasst:

Messen (101) eines letzten, von einer UE gesendeten SRS und Messen eines SINR eines letzten, von der UE gesendeten DMRS;

Bestimmen (102) der Kanalkorrelation zwischen der Kanalressource, die von dem letzten, von der UE gesendeten SRS belegt ist, und der zu schätzenden Kanalressource; und Bestimmen der Kanalkorrelation zwischen der Kanalressource, die von dem letzten, von der UE gesendeten DMRS belegt ist, und der zu schätzenden Kanalressource; und

Bestimmen (103) einer SINR-Schätzung der zu schätzenden Kanalressource entsprechend den gemessenen SINRs und der Stärke der beiden bestimmten Kanalkorrelationen.

2. Verfahren nach Anspruch 1, wobei der Schritt des Bestimmens der SINR-Schätzung der zu schätzenden Kanalressource entsprechend den gemessenen SINRs und der Stärke der beiden bestimmten Kanalkorrelationen umfasst: Vergleichen der Kanalkorrelation zwischen der Kanalressource, die von dem letzten, von der UE gesendeten SRS belegt ist, und der zu schätzenden Kanalressource mit der Kanalkorrelation zwischen der Kanalressource, die von dem letzten, von der UE gesendeten DMRS belegt ist, und der zu schätzenden Kanalressource; wenn die Kanalkorrelation zwischen der Kanalressource, die von dem letzten, von der UE gesendeten SRS belegt ist, und der zu schätzenden Kanalressource stärker ist, Heranziehen des gemessenen SINR des SRS als die SINR-Schätzung der zu schätzenden Kanalressource; andernfalls Heranziehen des gemessenen SINR des DMRS als SINR-Schätzung der zu schätzenden Kanalressource.

3. Verfahren nach Anspruch 1, wobei der Schritt des Bestimmens der SINR-Schätzung der zu schätzenden Kanalressource entsprechend den gemessenen SINRs und der Stärke der beiden bestimmten Kanalkorrelationen umfasst: Summieren der beiden bestimmten Kanalkorrelationen; Heranziehen des Verhältnisses der Kanalkorrelation zwischen der von dem SRS belegten Kanalressource und der zu schätzenden Kanalressource zur Summe der beiden Kanalkorrelationen als SINR-Gewicht des SRS und Heranziehen des Verhältnisses der Kanalkorrelation zwischen der von dem DMRS belegten Kanalressource und der zu schätzenden Kanalressource zur Summe von zwei Kanalkorrelationen als SINR-Gewicht des DMRS; Berechnen des Produkts aus dem SINR-Gewicht des SRS und dem SINR des SRS und Berechnen des Produkts aus dem SINR-Gewicht des DMRS und dem SINR des DMRS; und Summieren der beiden Produkte, um die SINR-Schätzung der zu schätzenden Kanalressource zu erhalten.

4. Verfahren nach Anspruch 1, wobei die Kanalkorrelation zwischen der Kanalressource, die von dem letzten, von der UE gesendeten SRS belegt ist, und der zu schätzenden Kanalressource berechnet wird als:

$$R\_SRS = \frac{1}{\sqrt{(\alpha \times T\_SRS)^2 + (\beta \times F\_SRS)^2}}$$

wobei R_SRS eine Kanalkorrelation zwischen der Kanalressource, die von dem letzten, von der UE gesendeten SRS belegt ist, und der zu schätzenden Kanalressource ist, $\alpha$ eine Zeitversatz-Sensitivität eines Funkkanals ist, $\beta$ eine Frequenzversatz-Sensitivität eines Funkkanals ist, T_SRS ein Zeitversatz der Kanalressource ist, die von dem letzten, von der UE bezüglich der zu schätzenden Kanalressource gesendeten SRS belegt ist, F_SRS ein Frequenzversatz der Kanalressource ist, die von dem letzten, von der UE bezüglich der zu schätzenden Kanalressource gesendeten SRS belegt ist.

5. Verfahren nach Anspruch 1, wobei die Kanalkorrelation zwischen der Kanalressource, die von dem letzten, von der UE gesendeten DMRS belegt ist, und der zu schätzenden Kanalressource berechnet wird als:

$$R\_DMRS = \frac{1}{\sqrt{(\alpha \times T\_DMRS)^2 + (\beta \times F\_DMRS)^2}}$$

wobei R_DMRS eine Kanalkorrelation zwischen der Kanalressource, die von dem letzten, von der UE gesendeten DMRS belegt ist, und der zu schätzenden Kanalressource ist, $\alpha$ eine Zeitversatz-Sensitivität eines Funkkanals ist, $\beta$ eine Frequenzversatz-Sensitivität eines Funkkanals ist, T_DMRS ein Zeitversatz der Kanalressource ist, die von dem letzten, von der UE bezüglich der zu schätzenden Kanalressource gesendeten DMRS ist, F_DMRS ein Frequenzversatz der Kanalressource ist, die von dem letzten, von der UE bezüglich der zu schätzenden Kanalressource gesendeten DMRS belegt ist.

6. Verfahren nach Anspruch 4 oder 5, weiter umfassend:
Vorausberechnen und Speichern einer Zeitversatz-Sensitivität und einer Frequenzversatz-Sensitivität eines Funkkanals; Berechnen der Zeitversatz-Sensitivität und der Frequenzversatz-Sensitivität des Funkkanals jeweils zu jeder vorangegebenen Messperiode; und Ersetzen der gespeicherten Zeitversatz-Sensitivität durch die berechnete Zeitversatz-Sensitivität und Ersetzen der gespeicherten Frequenzversatz-Sensitivität durch die berechnete Frequenzversatz-Sensitivität.

7. Verfahren nach Anspruch 6, wobei
der Schritt des Berechnens der Zeitversatz-Sensitivität des Funkkanals umfasst:

Auffordern der UE zur Übermittlung identischer Pilotsequenzen nacheinander auf derselben Frequenz-Domain-Position; und Berechnen der Korrelation der empfangenen Pilotsequenzen und Heranziehen der Korrelation als Zeitversatz-Sensitivität;
der Schritt des Berechnens der Frequenzversatz-Sensitivität umfasst: Auffordern der UE zur Übermittlung identischer Pilotsequenzen gleichzeitig auf zwei Frequenz-Domain-Ressourcen; und Berechnen der Korrelation der empfangenen Pilotsequenzen und Heranziehen der Korrelation als Frequenzversatz-Sensitivität.

8. Vorrichtung zur Schätzung eines SINR, wobei die Vorrichtung umfasst:

ein Messmodul, das angeordnet ist zum Messen (101) eines SINR wenigstens eines letzten, von einer UE gesendeten SRS und Messen eines SINR wenigstens eines letzten, von der UE gesendeten DMRS;
ein Berechnungsmodul, das angeordnet ist zum Bestimmen (102) der Kanalkorrelation zwischen der Kanalressource, die von dem letzten, von der UE gesendeten SRS belegt ist, und der zu schätzenden Kanalressource und Bestimmen der Kanalkorrelation zwischen der Kanalressource, die von dem letzten, von der UE gesendeten DMRS belegt ist, und der zu schätzenden Kanalressource; und
ein Schätzungsmodul, das angeordnet ist zum Bestimmen (103) einer SINR-Schätzung der zu schätzenden Kanalressource entsprechend den gemessenen SINRs und der Stärke der beiden bestimmten Kanalkorrelationen.

9. Vorrichtung nach Anspruch 8, wobei das Schätzungsmodul umfasst:

ein Vergleichsmodul, das angeordnet ist zum Vergleichen der Kanalkorrelation zwischen der Kanalressource, die von dem letzten, von der UE gesendeten SRS belegt ist, und der zu schätzenden Kanalressource mit der Kanalkorrelation zwischen der Kanalressource, die von dem letzten, von der UE gesendeten DMRS belegt ist, und der zu schätzenden Kanalressource und Senden des Vergleichsergebnisses an ein Bestimmungsmodul; und
wobei das Bestimmungsmodul angeordnet ist zum Heranziehen des SINR mit stärkerer Kanalkorrelation, ausgewählt aus den SINRs des SRS und DMRS als SINR-Schätzung der zu schätzenden Kanalressource entsprechend dem Vergleichsergebnis.

**10.** Vorrichtung nach Anspruch 8 oder 9, wobei das Schätzungsmodul umfasst:

ein erstes Berechnungsmodul, das angeordnet ist zum Berechnen der Summe der beiden bestimmten Kanalkorrelationen; Heranziehen des Verhältnisses der Kanalkorrelation zwischen der von dem SRS belegten Kanalressource und der zu schätzenden Kanalressource zur Summe von zwei Kanalkorrelationen als SINR-Gewicht des SRS; und Heranziehen des Verhältnisses der Kanalkorrelation zwischen der von dem DMRS belegten Kanalressource und der zu schätzenden Kanalressource zur Summe zweier Kanalkorrelationen als SINR-Gewicht des DMRS; und

ein zweites Berechnungsmodul, das angeordnet ist zum Berechnen eines Produkts aus dem SINR-Gewicht des SRS und dem SINR des SRS, Berechnen eines Produkts aus dem SINR-Gewicht des DMRS und dem SINR des DMRS und Summieren der beiden Produkte, um die SINR-Schätzung der zu schätzenden Kanalressource zu erhalten.

**Revendications**

**1.** Procédé d'estimation d'un SINR, le procédé comprenant :

la mesure (101) d'un SINR d'un dernier SRS transmis par un UE, et la mesure d'un SINR d'un dernier DMRS transmis par l'UE ;

la détermination (102) d'une corrélation de canal entre une ressource de canal occupée par le dernier SRS transmis par l'UE et une ressource de canal à estimer, et la détermination d'une corrélation de canal entre une ressource de canal occupée par le dernier DMRS transmis par l'UE et une ressource de canal à estimer ; et

la détermination (103) an estimation de SINR de la ressource de canal à estimer en fonction des SINR mesurés et de la force des deux corrélations de canal déterminées.

**2.** Procédé selon la revendication 1, dans lequel l'étape de détermination de l'estimation de SINR de la ressource de canal à estimer en fonction des SINR mesurés et de la force des deux corrélations de canal déterminées comprend :

la comparaison de la corrélation de canal entre la ressource de canal occupée par le dernier SRS transmis par l'UE et la ressource de canal à estimer avec la corrélation de canal entre la ressource de canal occupée par le dernier DMRS transmis par l'UE et la ressource de canal à estimer ; si la corrélation de canal entre la ressource de canal occupée par le dernier SRS transmis par l'UE et la ressource de canal à estimer est plus forte, la considération du SINR mesuré du SRS comme l'estimation de SINR de la ressource de canal à estimer ; sinon, la considération du SINR mesuré du DMRS comme l'estimation de SINR de la ressource de canal à estimer.

**3.** Procédé selon la revendication 1, dans lequel l'étape de la détermination l'estimation de SINR de la ressource de canal à estimer en fonction des SINR mesurés et de la force des deux corrélations de canal déterminées comprend :

le calcul de la somme des deux corrélations de canal déterminées ; la considération du rapport entre la corrélation de canal, entre la ressource de canal occupée par le SRS et la ressource de canal à estimer, et la somme de deux corrélations de canal comme un poids de SINR du SRS, et la considération du rapport entre la corrélation de canal, entre la ressource de canal occupée par le DMRS et la ressource de canal à estimer, et la somme de deux corrélations de canal comme un poids de SINR du DMRS ; le calcul du produit du poids de SINR du SRS et du SINR du SRS, et le calcul du produit du poids de SINR du DMRS et du SINR du DMRS ; et le calcul de la somme des deux produits, pour obtenir l'estimation de SINR de la ressource de canal à estimer.

**4.** Procédé selon la revendication 1, dans lequel la corrélation de canal entre la ressource de canal occupée par le dernier SRS transmis par l'UE et la ressource de canal à estimer est calculée comme :

$$R\_SRS = \frac{1}{\sqrt{(\alpha \times T\_SRS)^2 + (\beta \times F\_SRS)^2}}$$

dans lequel R_SRS est une corrélation de canal entre la ressource de canal occupée par le dernier SRS transmis par l'UE et la ressource de canal à estimer, $\alpha$ est une sensibilité de décalage de temps d'un canal sans fil, $\beta$ est une sensibilité de décalage de fréquence d'un canal sans fil, $T\_SRS$ est un décalage de temps de la ressource de canal occupée par le dernier SRS transmis par l'UE par rapport à la ressource de canal à estimer, *F_SRS* est un décalage de fréquence de la ressource de canal occupée par le dernier SRS transmis par l'UE par rapport à la ressource de canal à estimer.

5. Procédé selon la revendication 1, dans lequel la corrélation de canal entre la ressource de canal occupée par le dernier DMRS transmis par l'UE et la ressource de canal à estimer est calculée comme :

$$R\_DMRS = \frac{1}{\sqrt{(\alpha \times T\_DMRS)^2 + (\beta \times F\_DMRS)^2}}$$

dans lequel R_DMRS est une corrélation de canal entre la ressource de canal occupée par le dernier DMRS transmis par l'UE et la ressource de canal à estimer, $\alpha$ est une sensibilité de décalage de temps d'un canal sans fil, $\beta$ est une sensibilité de décalage de fréquence d'un canal sans fil, *T_DMRS* est un décalage de temps de la ressource de canal occupée par le dernier DMRS transmis par l'UE par rapport à la ressource de canal à estimer, *F_DMRS* est un décalage de fréquence de la ressource de canal occupée par le dernier DMRS transmis par l'UE par rapport à la ressource de canal à estimer.

6. Procédé selon la revendication 4 ou 5, comprenant en outre :
le pré-calcul et le stockage d'une sensibilité de décalage de temps et d'une sensibilité de décalage de fréquence d'un canal sans fil ; le calcul de la sensibilité de décalage de temps et de la sensibilité de décalage de fréquence du canal sans fil respectivement à chaque période de mesure définie ; et le remplacement de la sensibilité de décalage de temps stockée par la sensibilité de décalage de temps calculée, et le remplacement de la sensibilité de décalage de fréquence stockée par la sensibilité de décalage de fréquence calculée.

7. Procédé selon la revendication 6, dans lequel
l'étape de calcul de la sensibilité de décalage de temps du canal sans fil comprend : la demande à l'UE de transmettre des séquences pilotes identiques séquentiellement au niveau d'une même position de domaine fréquentiel ; et le calcul d'une corrélation des séquences pilotes reçues, et la considération de la corrélation comme la sensibilité de décalage de temps ;
l'étape de calcul de la sensibilité de décalage de fréquence comprend : la demande à l'UE de transmettre des séquences pilotes identiques simultanément au niveau de ressources de domaine fréquentiel ; et le calcul de la corrélation des séquences pilotes reçues, et la considération de la corrélation comme la sensibilité de décalage de fréquence.

8. Dispositif d'estimation d'un SINR, le dispositif comprenant :

un module de mesure qui est agencé pour mesurer (101) un SINR d'un dernier SRS transmis par un UE, et mesurer un SINR d'un dernier DMRS transmis par l'UE ;
un module de calcul qui est agencé pour déterminer (102) une corrélation de canal entre une ressource de canal occupée par le dernier SRS transmis par l'UE et une ressource de canal à estimer, et déterminer une corrélation de canal entre une ressource de canal occupée par le dernier DMRS transmis par l'UE et une ressource de canal à estimer ; et
un module d'estimation qui est agencé pour déterminer (103) une estimation de SINR de la ressource de canal à estimer en fonction des SINR mesurés et d'une force des deux corrélations de canal déterminées.

9. Dispositif selon la revendication 8, dans lequel le module d'estimation comprend :

un module de comparaison qui est agencé pour comparer la corrélation de canal entre la ressource de canal occupée par le dernier SRS transmis par l'UE et la ressource de canal à estimer avec la corrélation de canal entre la ressource de canal occupée par le dernier DMRS transmis par l'UE et la ressource de canal à estimer, et envoyer un résultat de comparaison à un module de détermination ; et
le module de détermination étant agencé pour prendre le SINR avec une plus forte corrélation de canal sélectionné à partir des SINR du SRS et DMRS comme l'estimation de SINR de la ressource de canal à estimer en fonction du résultat de comparaison.

10. Dispositif selon la revendication 8 ou 9, dans lequel le module d'estimation comprend : un premier module de calcul qui est agencé pour calculer la somme des deux corrélations de canal déterminées ; prendre le rapport entre la corrélation de canal, entre la ressource de canal occupée par le SRS et la ressource de canal à estimer, et la somme de deux corrélations de canal comme un poids de SINR du SRS ; et prendre le rapport entre la corrélation de canal, entre la ressource de canal occupée par le DMRS et la ressource de canal à estimer, et la somme de deux corrélations de canal comme un poids de SINR du DMRS ; et

un deuxième module de calcul qui est agencé pour calculer un produit du poids de SINR du SRS et du SINR du SRS, calculer un produit du poids de SINR du DMRS et du SINR du DMRS, et calculer la somme des deux produits pour obtenir l'estimation de SINR de la ressource de canal à estimer.

Fig. 1

the eNodeB measures the SINR of the last SRS sent by the UE, and measures the SINR of the last DMRS sent by the UE ⌐101

the eNodeB determines the channel correlation between the channel resource occupied by the last SRS sent by the UE and the channel resource to be estimated, and determines the channel correlation between the channel resource occupied by the last DMRS sent by the UE and the channel resource to be estimated ⌐102

the eNodeB determines the SINR estimate of the channel resource to be estimated according to the measured SINRs and the determined channel correlations ⌐103

Fig. 2

The device for estimating an SINR

| Measuring module 21 | | Calculating module 22 |

Estimation module 23

| Determining module 232 | ← | Comparing module 231 |

Fig. 3

The device for estimating an SINR

| Measuring module 31 | | Calculating module 32 |

Estimation module 33

| Determining module 332 | ← | Comparing module 331 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1981199 A
- US 2006104382 A

- EP 1821445 A

**Non-patent literature cited in the description**

- *3GPP TSG RAN WG1 #56,* 09 February 2009